# FASCICULE DE BREVET EUROPEEN

(11) **EP 1 883 551 B1**
(45) Date de publication et mention de la délivrance du brevet: **18.05.2011**
(21) Numéro de dépôt: 06794459.5
(22) Date de dépôt: 24.05.2006
(51) Int. Cl.: B60J 10/00, B60J 10/02

(54) **DISPOSITIF DE FIXATION D'UN PROFILE ENJOLIVEUR SUR UN CORDON PROFILE**
VORRICHTUNG ZUR FIXIERUNG EINES SCHMUCKPROFILABSCHNITTS AUF EINEM GEFORMTEN BAND
DEVICE FOR FIXING AN ORNAMENTAL PROFILED SECTION ON A SHAPED BAND

(30) Priorité: 26.05.2005 FR 0551382
(43) Date de publication de la demande: 06.02.2008
(73) Titulaire: SAINT-GOBAIN GLASS FRANCE, 92400 Courbevoie (FR)
(72) Inventeur: DEBAILLEUL, Romain, F-60280 Margny-Les-Compiègne (FR); HUCHET, Gérard, F-60350 Autrêches (FR); SUBRA, Renaud, F-60200 Compiègne (FR)
(74) Mandataire: Jamet, Vincent
(86) Numéro de dépôt international: PCT/FR2006/050479
(87) Numéro de publication internationale: WO 2007/003823

(56) Documents cités:
- EP-A- 0 258 128
- WO-A-94/16186
- WO-A-99/55547
- WO-A-2005/033526
- FR-A1- 2 340 217
- GB-A- 1 230 894
- US-A- 3 968 613
- US-A- 5 088 787

## Description

La présente invention se rapporte au domaine de la réalisation de cordons profilés sur des vitrages.

La présente invention se rapporte plus particulièrement à un dispositif de fixation d'un profilé enjoliveur sur une portion d'un cordon profilé fixé sur un vitrage et en particulier sur au moins une partie de la périphérie d'un vitrage, et notamment d'un vitrage de véhicule.

Le but d'un profilé enjoliveur est de permettre de masquer une partie au moins d'un cordon profilé et d'en modifier ainsi l'aspect général. Un profilé enjoliveur est en général constitué d'une baguette en métal ou en toute autre matière qui a une apparence différente de celle du cordon profilé et peut être par exemple d'aspect métallique, brillant ou mat, ou encore être peint.

Le dispositif de fixation du profilé enjoliveur selon l'invention est du type comportant au moins un clip présentant au moins une partie de coopération amont destinée à permettre la coopération avec ledit cordon profilé et une partie de coopération aval destinée à permettre la coopération avec ledit profilé enjoliveur.

La « partie de coopération amont » désigne les moyens qui permettent de fixer le clip au cordon profilé. Normalement, ces moyens sont mis en oeuvre en premier ; c'est la raison pour laquelle ils sont qualifiés de moyens « amonts ». La « partie de coopération aval » désigne quant à elle les moyens qui permettent de fixer le profilé enjoliveur au clip et qui sont donc en général mis en oeuvre après les moyens amonts. Lorsque le clip est intégré au profilé enjoliveur par exemple, cette règle ne s'applique pas, mais la dénomination est tout de même conservée.

Ce (ou ces) clip(s) a (ou ont) ainsi pour but de permettre de fixer d'une manière amovible le profilé enjoliveur au cordon profilé et par voie de conséquence au vitrage.

Cette fixation doit être suffisamment forte pour que le profilé enjoliveur reste maintenu en place en temps normal et notamment dans le cas d'un vitrage de véhicule pendant le fonctionnement du véhicule, mais cette fixation ne doit toutefois pas être définitive afin de permettre en cas de besoin et en particulier lors d'un remplacement du vitrage, d'accéder à la partie de cordon profilé que le profilé enjoliveur masque en temps normal.

L'art antérieur connaît par exemple de la demande de brevet français N° FR 2 340 217 un tel dispositif de fixation. Dans ce document la partie amont présente la forme générale en coupe d'un L et l'extrémité recourbée de cette forme en L est introduite dans une ouverture large ménagée dans le cordon profilé et débouchant de part et d'autre du cordon profilé. La partie droite de la forme en L est destinée à venir contre le chant du vitrage et l'extrémité recourbée est destinée à venir contre la face intérieure du vitrage. Des pattes sont en outre prévues sur le clip pour venir coopérer avec la face extérieure du vitrage.

La mise en place du ou des clips et du profilé enjoliveur selon cette antériorité ne peut se faire qu'en même temps que la fixation du cordon profilé en raison du fait que l'extrémité recourbée vient contre la face intérieure du vitrage. Ce dispositif ne peut donc être mis en oeuvre qu'avec un cordon profilé rapporté.

Ce dispositif ne peut ainsi pas être utilisé lorsque le cordon profilé est fabriqué par moulage direct sur le vitrage selon la technique bien connue d'encapsulation ni lorsque le cordon profilé est fabriqué par extrusion directe de la matière à la surface du vitrage.

Par ailleurs, ce dispositif est difficile à mettre en oeuvre lorsque le vitrage est bombé. En effet, les techniques industrielles de bombage actuelles ne permettent pas l'obtention de vitrages qui soient absolument parfaitement tous identiques.

Du fait de la coopération directe entre le clip et le vitrage, si le vitrage, bien qu'étant acceptable du fait des tolérances de fabrication ne présente pas la cote nominale, par exemple s'il est légèrement moins épais ou au contraire légèrement plus épais à l'endroit prévu pour la coopération avec le clip, alors, le clipage est difficile à réaliser. Le profilé enjoliveur peut en outre alors ne pas être exactement contre la surface extérieure du cordon profilé et l'effet esthétique est alors déplorable.

En outre, du fait qu'une partie du clip se retrouve prisonnière entre le vitrage et le cordon de colle collant le vitrage dans la baie de carrosserie, il n'est pas possible de procéder uniquement au remplacement du clip si celui-ci est endommagé par exemple. Si un clip est endommagé, c'est tout le vitrage qui doit être changé.

Enfin, le montage est particulièrement fastidieux car il faut en même temps cliper le clip de manière à ce que les pattes coopèrent avec les faces intérieure et extérieure du vitrage et en même temps veiller au bon positionnement du cordon profilé rapporté. Une telle opération ne peut être opérée que manuellement et malgré la dextérité des opérateurs, elle ne peut conduire à un effet esthétique parfaitement constant sur tout le pourtour du vitrage et sur tous les vitrages.

L'art antérieur connaît par ailleurs la demande internationale de brevet N° WO 2005/033526 qui porte sur un système de clipage de profilé enjoliveur pour cordon profilé utilisant un clip souple présentant un premier bossage simple destiné à être introduit dans une première rainure simple du cordon profilé et un deuxième bossage plus complexe, en forme de crochet, destiné à être introduit dans une rainure également plus complexe du cordon profilé par déformation du clip souple. Le clip est ainsi crocheté sur le cordon profilé. Un effet de pinçage du cordon profilé est par ailleurs obtenu en réalisant une distance légèrement plus courte entre les deux bossages du clip qu'entre les deux rainures du cordon profilé.

Pour la fixation du profilé enjoliveur, le profilé est d'abord introduit dans un bossage du clip, puis le clip est à nouveau déformé pour permettre de passer le profilé enjoliveur au-dessus d'une saillie du cordon profilé.

Or, il se trouve que cette déformation est exactement contraire à la déformation qui a permet d'accrocher le clip sur le cordon profilé.

Une fois le montage terminé le clip souple est ainsi en permanence soumis à des tensions opposées qui tentent à la fois de le maintenir crocheté sur le cordon profilé et de maintenir le profilé enjoliveur clipé sur le clip.

Ce système ne donne pas satisfaction car les vibrations perçues au niveau du cordon profilé lors du fonctionnement du véhicule, particulièrement sur route cahoteuse, provoquent des déformations du joint qui peuvent engendrer un décrochement du clip souple sous tension permanente et par voie de conséquence peuvent entraîner la perte du profilé enjoliveur.

L'art antérieur connait du brevet N° US 3,968,613 un dispositif de fixation selon la préambule de la revendication N°1.

Le but de l'invention est de pallier les inconvénients de l'art antérieur en proposant un système de fixation d'un profilé enjoliveur qui soit fiable et permette un maintien du profilé enjoliveur y compris dans des conditions extrêmes notamment de vibration, qui soit facile et peu onéreux à mettre en oeuvre et qui puisse en outre être utilisé quelle que soit la technique de fixation du cordon profilé qui a été choisie.

La présente invention se rapporte ainsi dans son acception la plus large à un dispositif de fixation d'un profilé enjoliveur sur une portion d'un cordon profilé fixé sur un vitrage et en particulier sur au moins une partie de la périphérie d'un vitrage selon la revendication 1. dispositif comporte au moins un clip rigide présentant au moins une partie de coopération amont destinée à permettre la coopération avec ledit cordon profilé et une partie de coopération aval destinée à permettre la coopération avec ledit profilé enjoliveur, caractérisé en ce que ladite partie de coopération amont comporte au moins un élément mâle saillant ou un élément femelle creux, cet élément coopérant respectivement avec un élément femelle creux ou un élément mâle saillant correspondant ménagé dans le cordon profilé, ledit élément femelle creux présentant des dimensions intérieures au moins partiellement inférieures aux dimensions extérieures dudit élément mâle saillant.

La coopération amont selon l'invention consiste ainsi en un emboîtement d'un élément mâle saillant à l'intérieur d'un élément femelle creux de dimension moindre et un maintien par contact entre des parois respectives d'une part de l'élément mâle saillant et d'autre part de l'élément femelle creux. Ce contact engendre alors une mise en tension superficielle des surfaces des deux éléments en contact qui d'une manière surprenante s'oppose extraordinairement bien aux vibrations subies au niveau de la fixation lors du fonctionnement du véhicule.

Dans une première variante de réalisation de l'invention, ledit élément mâle saillant est constitué d'un bossage présentant en coupe transversale un tronc et une extrémité arrondie.

Dans cette première variante, l'élément mâle saillant présente, de préférence en coupe transversale un rétrécissement de section, afin d'améliorer encore le maintient de l'élément mâle dans l'élément femelle.

Dans une deuxième variante de réalisation de l'invention, l'élément mâle saillant présente en coupe transversale une forme sensiblement parallélépipédique.

D'autres variantes de réalisation de la forme de l'élément mâle saillant sont également envisageables.

Quelle que soit la forme de l'élément mâle saillant, il est possible de réaliser l'élément femelle creux soit sur le cordon profilé, soit sur le clip ; ce sont les deux sous-variantes possibles.

L'élément femelle creux peut alors former un trou ne débouchant que sur une face respectivement dudit cordon profilé ou du clip.

Dans la première de ces sous-variantes, lorsque l'élément femelle creux est réalisé dans ledit cordon profilé, l'élément femelle creux forme, de préférence, un trou ne débouchant que sur une face dudit cordon profilé. Quelle que soit la technologie mise en oeuvre pour la réalisation du cordon profilé, la réalisation d'un tel trou ne pose pas de difficultés particulières.

Dans la deuxième de ces sous-variantes, lorsque l'élément femelle creux est réalisé dans ledit clip, l'élément femelle creux forme, de préférence, un trou débouchant sur deux faces opposées dudit clip. Le maintien de l'élément mâle saillant dans l'élément femelle creux est de ce fait légèrement moins efficace, mais il peut-être plus simple de réaliser une fente débouchant sur deux faces opposées du clip qu'une cavité ne débouchant que sur une seule face, en particulier lorsque le clip est fabriqué par moulage.

Quelle que soit la variante ou sous-variante de réalisation de l'invention, ladite partie de coopération amont présente en outre, une partie proximale recourbée destinée à venir appuyer sur une face intérieure dudit vitrage.

Cette partie proximale recourbée présente en outre, de préférence, de face sensiblement la forme d'un T.

De plus, cette partie proximale peut être collée au moins en partie sur la face intérieure dudit vitrage ou sur le cordon profilé, afin d'améliorer la coopération entre le clip et le cordon profilé fixé au vitrage.

Quelle que soit la variante ou sous-variante de réalisation de l'invention également, ladite partie de coopération aval présente, de préférence, en vue de côté sensiblement la forme d'un V ou d'un Y.

Dans une version particulière, une branche du V ou Y se termine par une extrémité arrondie et la branche adjacente du V ou Y se termine par une extrémité triangulaire ou en L, afin de faciliter le montage du profilé enjoliveur sur le clip.

Cette extrémité arrondie présente, de préférence, un diamètre légèrement inférieur à l'épaisseur de la branche et elle est positionnée décalée par rapport à un axe de symétrie de la branche qui la porte.

L'extrémité triangulaire présente quant à elle, de préférence, en coupe sensiblement la forme d'un triangle équilatéral dont la hauteur est environ le triple de l'épaisseur de la branche qui la porte.

Dans une autre version particulière, le clip est venu de matière avec ledit profilé enjoliveur.

La présente invention se rapporte ainsi aussi à un profilé enjoliveur intégrant au moins un clip pour cette autre version particulière.

La présente invention se rapporte en outre à un clip pour un dispositif de fixation selon l'invention, ledit clip présentant au moins une partie de coopération amont destinée à permettre la coopération avec un cordon profilé et une partie de coopération aval destinée à permettre la coopération avec un profilé enjoliveur.

La présente invention se rapporte également à un vitrage muni en particulier sur au moins une partie de sa périphérie d'un cordon profilé fixé audit vitrage, ledit cordon profilé étant pourvu sur au moins une portion d'un profilé enjoliveur, ledit vitrage comportant en outre un dispositif de fixation selon l'invention.

Pour ce vitrage, l'élément mâle saillant ou l'élément femelle creux est, de préférence, ménagé dans la partie du cordon profilé adjacente au chant du vitrage.

Avantageusement, le dispositif de fixation selon l'invention peut être mis en oeuvre aussi bien lorsque le cordon profilé est encapsulé ou extrudé sur le vitrage que lorsque le cordon profilé est collé sur le vitrage.

Avantageusement également, le clipage du, ou de préférence des, clip(s) est extrêmement simple à réaliser ; il est même automatisable car le mouvement de clipage du clip sur le cordon profilé est un mouvement de simple translation, sans rotation. Le clipage du profilé enjoliveur sur le clip est également automatisable car le mouvement nécessaire est également simple.

Avantageusement en outre, le système de clipage selon l'invention est tel que le retrait du profilé enjoliveur ne peut se faire qu'en opérant une déformation plastique de ce dernier, cette déformation le rendant inutilisable par la suite, afin d'éviter le vol du profilé enjoliveur.

La présente invention sera mieux comprise à la lecture de la description détaillée ci-après d'exemples de réalisation non limitatifs et des figures ci-jointes :

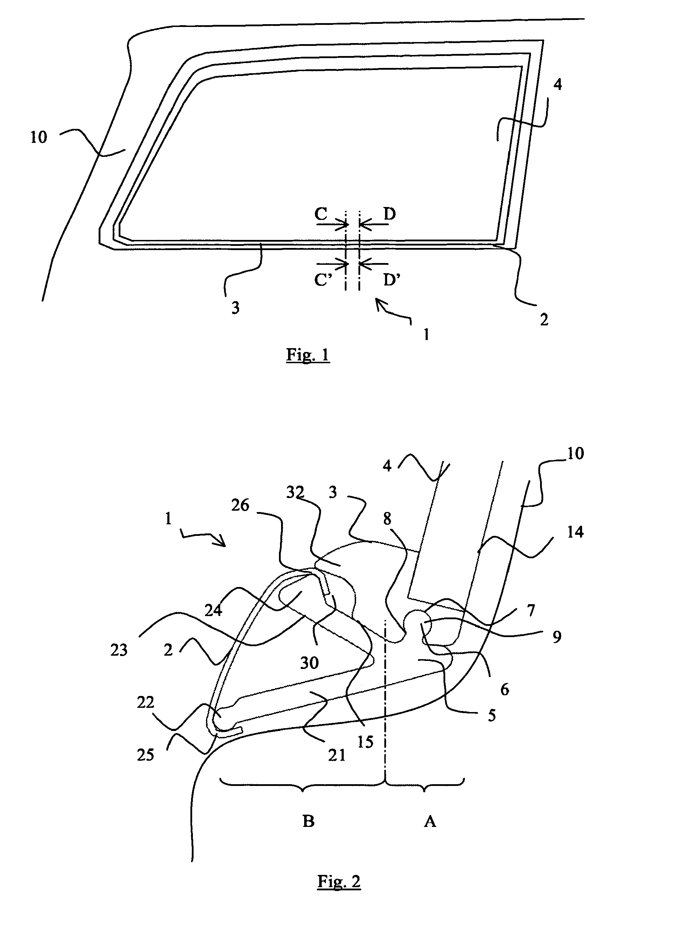

- La figure 1 illustre une vue de côté de l'extrémité arrière d'un véhicule muni d'un vitrage présentant un profilé enjoliveur fixé à l'aide d'un dispositif de fixation selon l'invention ;
- La figure 2 illustre une vue en coupe selon C-C' de la figure 1 d'un premier exemple non couvert par les revendications, pour la première variante de réalisation à élément mâle saillant arrondi, ce premier exemple correspondant à une sous-variante à élément mâle saillant sur le clip ;

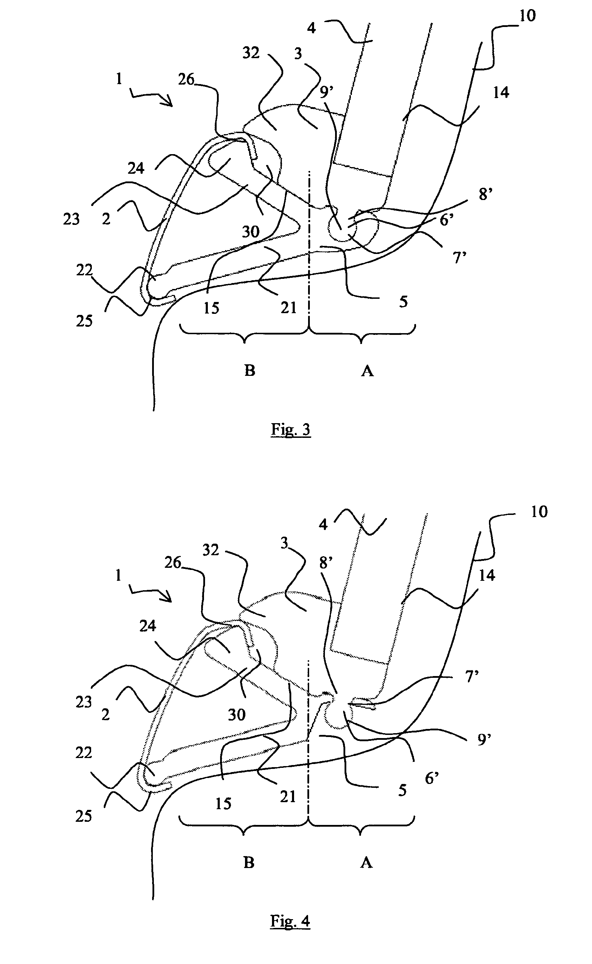

- La figure 3 illustre une vue en coupe selon C-C' de la figure 1 d'un deuxième exemple non couvert par les revendications, pour la première variante de réalisation à élément mâle saillant arrondi, ce deuxième exemple correspondant à une sous-variante à élément femelle creux sur le clip et non débouchant ;
- La figure 4 illustre une vue en coupe selon C-C' de la figure 1 d'un troisième exemple non couvert par les revendications, pour la première variante de réalisation de l'invention à élément mâle saillant arrondi, ce troisième exemple correspondant à une sous-variante à élément femelle creux sur le clip et débouchant sur des faces opposées du clip ;

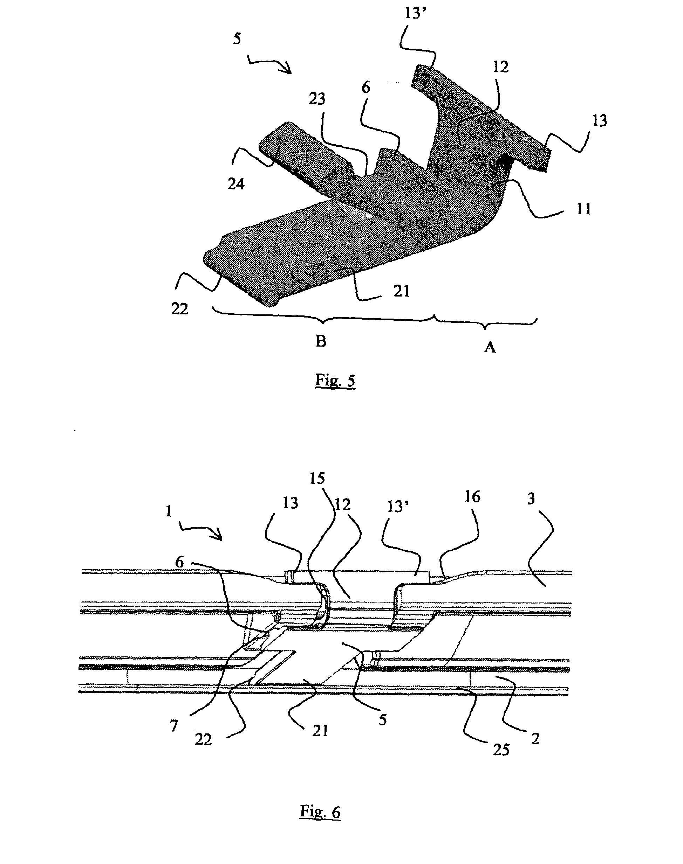

- La figure 5 illustre une vue en élévation d'un clip pour un quatrième exemple de réalisation de l'invention, ce clip mettant en oeuvre la deuxième variante de réalisation de l'invention à élément mâle saillant à bords plats et mettant en oeuvre une sous-variante à élément mâle saillant sur le clip et à partie proximale recourbée ;
- La figure 6 illustre une vue intérieure d'un exemple de coopération entre un clip, un profilé enjoliveur et un cordon profilé pour un cinquième exemple de réalisation de l'invention, ce clip mettant également en oeuvre la deuxième variante de réalisation de l'invention et une sous-variante à élément mâle saillant sur le clip et à partie proximale recourbée ;

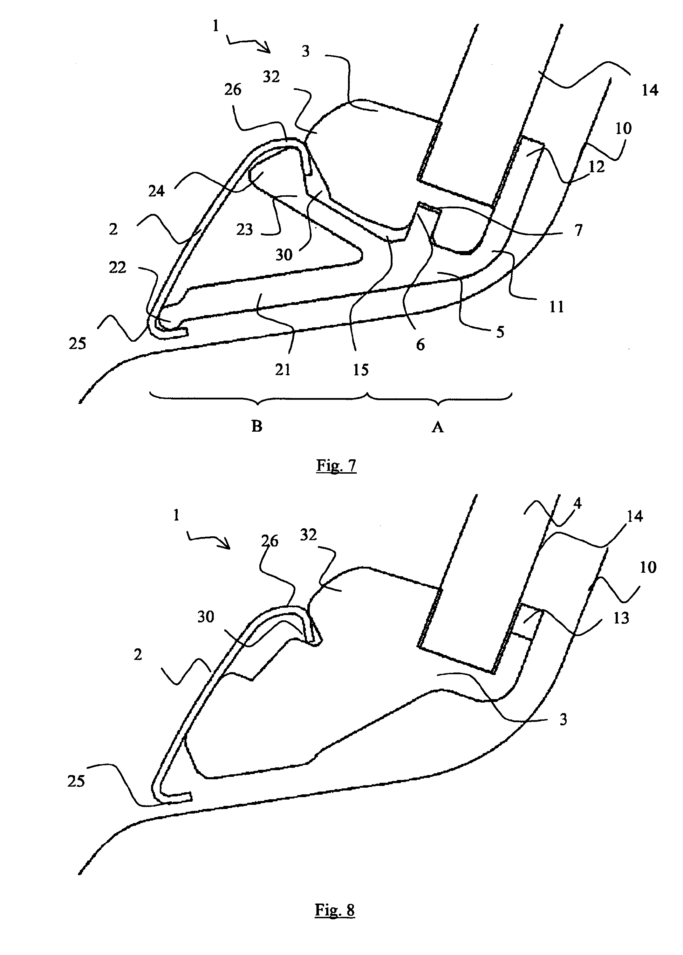

- La figure 7 illustre une vue en coupe selon C-C' de la figure 1 pour le cinquième exemple de réalisation de l'invention ;
- La figure 8 illustre une vue en coupe selon D-D' de la figure 1 pour ce cinquième exemple de réalisation de l'invention ;

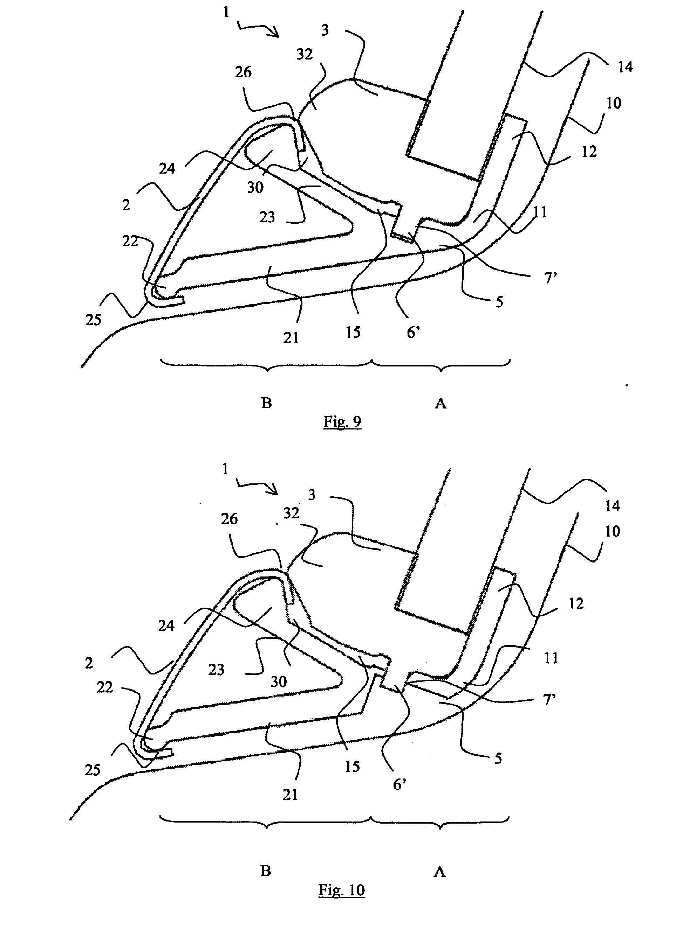

- La figure 9 illustre une vue en coupe selon C-C' de la figure 1 pour un sixième exemple de réalisation de l'invention, pour la deuxième variante de réalisation, ce sixième exemple correspondant à une sous-variante à élément femelle creux sur le clip et non débouchant et à partie proximale recourbée ; et
- La figure 10 illustre une vue en coupe selon C-C' de la figure 1 pour un septième exemple de réalisation de l'invention, pour la deuxième variante de réalisation, ce septième exemple correspondant à une sous-variante à élément femelle creux sur le clip et débouchant sur des faces opposées du clip et à partie proximale recourbée.

Il est précisé que les proportions entre les divers éléments représentés ne sont pas rigoureusement respectées dans ces figures afin d'en faciliter la lecture.

La présente invention se rapporte à un dispositif de fixation (1) d'un profilé enjoliveur (2) sur une portion d'un cordon profilé (3) fixé sur un vitrage (4), et notamment un vitrage automobile.

La figure 1 illustre une extrémité arrière d'un véhicule muni d'un vitrage (4) fixe sur la périphérie duquel on a réalisé un cordon profilé (3) en un matériau polymère souple.

Le matériau polymère constitutif du cordon profilé (3) peut être un thermoplastique (PVC, TPE, ...), un polyuréthanne ou encore un caoutchouc synthétique du type EPDM ou toute autre matière adéquate.

Le cordon profilé (3) a été fabriqué par mise en oeuvre d'un procédé de fabrication appelé « encapsulation » car il comporte une étape de moulage du cordon profilé (3) dans un dispositif de moulage, entre deux éléments de moulage, un élément de moulage accueillant la face intérieure du vitrage et un élément de moulage accueillant la face extérieure du vitrage, ces deux éléments de moulage étant refermés l'un sur l'autre pendant l'étape de moulage.

Sur la figure 1, le cordon profilé (3) est disposé sur toute la périphérie du vitrage (4) mais ce cordon profilé pourrait tout à fait n'être positionné que sur une partie de la périphérie du vitrage ou sur une partie quelconque du vitrage.

Pour améliorer l'aspect esthétique du vitrage, une partie du cordon profilé (3) visible de l'extérieur du véhicule est masquée par un profilé enjoliveur (2) qui est ici disposé seulement en partie basse du vitrage, mais qui pourrait également être disposé sur toute la périphérie du vitrage (4) et/ou sur une partie quelconque du vitrage.

Le vitrage (4) peut être un vitrage monolithique, c'est-à-dire constitué d'une feuille de matière unique, ou être un vitrage multiple, c'est-à-dire constitué de plusieurs feuilles de matière entre lesquelles est inséré au moins une couche de matière adhérente dans le cas des vitrages feuilletés, ou au moins un espace intercalaire dans le cas des double-vitrages. La (ou les) feuille(s) de matière peut (ou peuvent) être minérale(s), notamment en verre, ou organique(s), notamment en matière plastique.

Dans le cas d'un vitrage pour véhicule, le vitrage présente généralement au moins partiellement à sa périphérie une bande d'ornementation, non illustrée ici. Cette bande d'ornementation résulte en général d'un dépôt d'émail, réalisé sur la face intérieure du vitrage ou sur une face intercalaire du vitrage pour les vitrages composites, mais elle peut également résulter d'une coloration partielle et/ou périphérique d'une feuille de matière utilisée, notamment d'une feuille en matière organique.

Le dispositif (1) selon l'invention comporte, pour la fixation du profilé enjoliveur (2) au moins un clip (5) plus rigide que le cordon profilé (3), et de préférence plusieurs clip (5) répartis le long du profilé enjoliveur (2) suivant la longueur dudit profilé enjoliveur.

Chaque clip (5) présente au moins d'une part une partie de coopération amont A destinée à permettre la coopération entre le clip et ledit cordon profilé (3) et d'autre part une partie de coopération aval B destinée à permettre la coopération entre le clip et ledit profilé enjoliveur (2).

Dans une version de l'invention non illustrée ici, le (ou les) clip(s) (5) est (ou sont) venu(s) de matière avec ledit profilé enjoliveur (2). Dans cette version, la coopération entre le clip et ledit profilé enjoliveur s'effectue ainsi par la matière constituant la pièce unique : enjoliveur intégrant le (ou les) clip(s).

Dans cette version de l'invention, cette pièce unique peut être en métal ou en alliage métallique ou peut être en matière plastique. Lorsque la pièce unique est en matière plastique, elle peut être fabriquée par moulage et recouverte dans sa partie visible après le montage du vitrage d'une peinture présentant l'aspect d'un métal.

Dans toutes les versions de l'invention illustrées ici d'une part le profilé enjoliveur (2) et d'autre part le (ou les) clip(s) (5) constituent des pièces différentes qui ne sont assemblées ensemble qu'au moment du montage du profilé enjoliveur (2) contre le cordon profilé (3) fixé préalablement contre le bord inférieur du vitrage (4).

Dans toutes ces versions, la partie de coopération amont A du clip est fixée au cordon profilé (3) avant que le profilé enjoliveur (2) ne soit fixé au clip grâce à la partie B.

Le clip est choisi dans une matière présentant une rigidité supérieure à celle du cordon profilé. Le clip peut ainsi être en métal ou en alliage métallique, ou encore en matière plastique. Il présente un plan de symétrie selon sa longueur.

Selon l'invention, la partie de coopération amont A comporte au moins un élément mâle saillant (6) ou un élément femelle creux (7'), cet élément coopérant respectivement avec un élément femelle creux (7) ou un élément mâle saillant (6') correspondant, de forme sensiblement identique, ménagé dans le cordon profilé (3), ledit élément femelle creux (7, 7') présentant des dimensions intérieures au moins partiellement inférieures aux dimensions extérieures dudit élément mâle saillant (6, 6').

Cette coopération est ainsi du type « tenon-mortaise » avec un effet de frottement entre une partie au moins des surfaces des éléments.

L'élément qui est ménagé dans le cordon profilé est, de préférence, ménagé dans la partie du cordon profilé (3) adjacente au chant du vitrage (4). En effet, à cet endroit le cordon profilé (3) est moins épais et il présente ainsi une flexibilité supérieure qui favorise le positionnement et le maintien du ou de chaque élément mâle saillant dans le ou chaque élément femelle creux.

Dans une première variante non couvert par les revendications, illustrée aux figures 2 à 4, l'élément mâle saillant (6, 6') est constitué d'un bossage présentant en coupe transversale un tronc (8, 8') et une extrémité arrondie (9, 9'). Si l'élément mâle saillant (6, 6') s'étend sur plusieurs millimètres, l'extrémité arrondie (9, 9') est alors cylindrique ; sinon, l'extrémité arrondie (9, 9') est alors sphérique.

Dans ces trois figures, l'élément mâle saillant (6, 6') présente en coupe transversale un rétrécissement de section.

Pour ce faire, soit le tronc (8, 8') est moins large que l'extrémité arrondie (9, 9'), soit une diminution de la section est opérée entre le tronc (8, 8') et l'extrémité arrondie (9, 9').

L'élément femelle creux (7, 7') présente alors près de sa bouche par laquelle est introduit l'élément mâle, un section légèrement inférieure à celle du rétrécissement de section.

Le fait que la matière constitutive du clip soit plus rigide que la matière constitutive du cordon profilé (3) permet de jouer sur l'élasticité de la matière constitutive du cordon profilé (3) pour autoriser le passage de l'extrémité arrondie (9) malgré le rétrécissement de la section de la cavité.

### Exemple 1

Dans une première sous-variante de la première variante non couvert par les revendications et illustrée sur la figure 2, l'élément mâle saillant (6) est situé sur le clip (5) et l'élément femelle creux (7) correspondant est situé dans le cordon profilé (3).

Ici, l'élément femelle creux (7) forme un trou ne débouchant que sur une face du cordon profilé (3).

### Exemple 2

Dans une deuxième sous-variante de la première variante non couvert par les revendications et illustrée sur la figure 3, l'élément mâle saillant (6') est situé sur le cordon profilé (3) et l'élément femelle creux (7') correspondant est situé dans le clip (5).

Ici, l'élément femelle creux (7') forme un trou ne débouchant que sur une face du clip (5).

Dans ces deux premières sous-variantes, pour une meilleure coopération entre la protubérance réalisant l'élément mâle saillant et la cavité réalisant l'élément femelle creux, la protubérance et par conséquent également la cavité, présentent une forme générale identique, à la différence près que la cavité est légèrement plus petite de un à quelques dixièmes de millimètre sur certaines côtes.

### Exemple 3

Dans une troisième sous-variante de la première variante non couvert par les revendications et illustrée sur la figure 4, l'élément mâle saillant (6') est également situé sur le cordon profilé (3) et l'élément femelle creux (7') correspondant est situé dans le clip (5), comme pour la sous-variante précédente, mais ici, ledit élément femelle creux (7') forme un trou débouchant sur deux faces opposées du clip (5).

Dans une deuxième variante de l'invention, illustrée aux figures 5 à 10, l'élément mâle saillant (6, 6') est constitué d'un bossage présentant en coupe transversale une forme sensiblement parallélépipédique et plus précisément rectangulaire.

### Exemple 4

Dans une première sous-variante de la deuxième variante et illustrée sur la figure 5, l'élément mâle saillant (6) est situé sur le clip (5).

### Exemple 5

Dans une deuxième sous-variante de la deuxième variante et illustrée sur la figure 6, l'élément mâle saillant (6) est situé sur le clip (5).

Dans la première sous-variante illustrée figure 5, l'élément mâle saillant (6) présente une largeur sensiblement identique à la largeur de la base du clip sur laquelle il est monté, alors que dans la deuxième sous-variante illustrée figure 6, l'élément mâle saillant (6) présente une largeur supérieure à la largeur de la base du clip sur laquelle il est monté, cette largeur étant de l'ordre du double de la largeur de la base du clip.

Comme on peut le voir sur la figure 6, l'élément femelle creux (7) correspondant est situé dans le cordon profilé (3) et forme un trou ne débouchant que sur une face du cordon profilé (3). Ce trou présente, bien sur également une forme sensiblement parallélépipédique et plus précisément rectangulaire.

Dans la deuxième variante, comme on peut le voir plus en détail sur les figures 5 à 10, le maintien obtenu par la coopération entre la protubérance et la cavité peut ne pas être suffisant et il est prévu en outre que ladite partie de coopération amont A présente une partie proximale recourbée (11) destinée à venir appuyer sur une face intérieure (14) dudit vitrage (4).

La partie proximale recourbée (11) est ainsi nommée car elle est positionnée à proximité du vitrage (4).

Cette partie proximale recourbée (11), bien que située dans le prolongement de la base du clip portant la partie de coopération amont A, est positionnée sensiblement perpendiculairement à cette base, selon un angle qui est de préférence arrondi.

Comme on peut le voir en particulier sur les figures 5 et 6, la partie proximale recourbée (11) présente de face sensiblement la forme d'un T muni d'un tronc (12) et de deux branches (13, 13').

Dans le cas d'un vitrage pour véhicule présentant à sa périphérie une bande d'ornementation, les branches (13, 13') sont positionnées au moins partiellement sous ladite bande d'ornementation et de préférence en totalité sous cette bande, afin qu'elles ne soient pas visible de l'extérieur du véhicule.

Il est possible de prévoir que la partie proximale (11), et plus précisément les branches (13, 13') soient collées sur la face intérieure (14) du vitrage (4) ou sur le cordon profilé (3). Toutefois le clip peut alors être plus difficile à retirer en cas de besoin.

Sur les figures 6 à 10, le maintien au niveau des branches (13, 13') est assuré par un appui à la fois contre la face (14) et contre le bord supérieur du cordon profilé (3).

Comme on peut le voir sur la figure 6, un évidement (15) est opéré dans le cordon profilé (3) pour permettre le passage du clip (5) au niveau de la cavité (7). Cet évidement n'est pas strictement indispensable car on peut imaginer que le clip (5) contourne le cordon profilé (3), mais il est préférable de réaliser un tel évidement surtout lorsque le cordon profilé (3) est positionné très proche de la baie de la carrosserie (10).

De même, dans le cas de la deuxième variante, comme illustré sur les figures 6 et 7, un évidement (16) est opéré dans le cordon profilé (3) pour permettre le passage de la partie proximale (11) et le contact de cette partie avec la face intérieure (14). Cet évidement n'est pas non plus strictement indispensable car on peut imaginer que le la partie proximale (11) contourne le cordon profilé (3) et vienne, en appui dessus sans modification de sa forme, mais il est préférable de réaliser un tel évidement surtout lorsque le cordon profilé (3) est positionné très proche de la baie de la carrosserie (10).

Cet évidement (16) est également préférable lorsque la partie proximale (11) est collée au moins en partie sur la face intérieure (14) du vitrage (4) ou sur le cordon profilé (3).

### Exemple 6

Dans une sous-variante de la deuxième variante et illustrée sur la figure 9, l'élément mâle saillant (6') est situé sur le cordon profilé (3) et l'élément femelle creux (7') correspondant est situé dans le clip (5).

Ici, l'élément femelle creux (7') forme un trou ne débouchant que sur une face du clip (5).

### Exemple 7

Dans une autre sous-variante de la deuxième variante et illustrée sur la figure 10, l'élément mâle saillant (6') est également situé sur le cordon profilé (3) et l'élément femelle creux (7') correspondant est situé dans le clip (5), comme pour la sous-variante précédente, mais ici, l'élément femelle creux (7') forme un trou débouchant sur deux faces opposées du clip (5).

Les sous-variantes illustrées aux figures 9 et 10 présentent chacune une partie proximale (11) identique à celle de la sous-variante illustrée aux figures 6 à 8.

Dans le cas d'un vitrage pour véhicule, il est également possible de positionner un (ou plusieurs) insert(s) dans le cordon profilé (3) lors du moulage de ce cordon profilé, afin que le cordon profilé intègre cet (ou ces) insert(s).

Cet (ou ces) insert(s) peut (ou peuvent) être un (ou des) insert(s) :
- de renfort, généralement complètement intégré au cordon profilé (3), ou
- de fixation, généralement proéminent(s), pour la fixation du vitrage, ou
- de positionnement pour le positionnement correct du vitrage dans la baie de la carrosserie.

Dans les deux variantes essentielles de l'invention, le volume intérieur de la cavité est légèrement inférieur au volume extérieur de la protubérance, afin que la matière constitutive du cordon profilé (3) soit légèrement comprimée et exerce ainsi une force supplémentaire de retenue.

Dans toutes les variantes et versions de l'invention illustrées, la partie de coopération aval B présente en vue de côté sensiblement la forme d'un V ou d'un Y.

Comme illustré sur les figures, la branche inférieure (21) du V ou Y se termine par une extrémité arrondie (22) et la branche supérieure (23) du V ou Y se termine par une extrémité triangulaire (24).

Comme illustré également sur les figures, l'extrémité arrondie (22) présente un diamètre légèrement inférieur à l'épaisseur de la branche (21) et cette extrémité arrondie (22) n'est pas positionné dans le plan de symétrie de la branche (21), mais légèrement décalée vers le bas.

Comme illustré en outre sur les figures, l'extrémité triangulaire (24) présente en coupe sensiblement la forme d'un triangle équilatéral dont la hauteur est environ le triple de l'épaisseur de la branche (23) et dont la base se trouve dans le prolongement de la surface inférieure de la branche (23).

Il est également possible de réaliser cette extrémité sous forme de L et notamment de L incliné et formé de deux faces du triangle illustré : la base qui se trouve dans le prolongement de la surface inférieure de la branche (23) et l'aile qui est adjacente au profilé enjoliveur.

Le profilé enjoliveur (2) présente une extrémité basse (25) recourbée vers l'intérieur et une extrémité haute (26) également recourbée vers l'intérieur.

Pour la fixation du profilé enjoliveur :
- soit l'extrémité basse (25) est positionnée sous l'extrémité arrondie (22), puis l'extrémité haute (26) est introduite dans une fente (30) située sur la face extérieure du cordon profilé (3), entre l'extrémité triangulaire (24) et un rebord (32) du cordon profilé (3),
- soit l'extrémité haute (26) est introduite dans une fente (30) située sur la face extérieure du cordon profilé (3), entre l'extrémité triangulaire (24) et un rebord (32) du cordon profilé (3), puis l'extrémité basse (25) est positionnée sous l'extrémité arrondie (22).

Cette fixation est relativement facile à réaliser manuellement ou à l'aide d'un automate grâce la flexibilité du cordon profilé qui permet un déplacement relatif du clip rigide (5).

Le contact de l'extrémité haute (26) avec le rebord (32) tout le long du cordon profilé (3) n'est pas strictement indispensable, mais il permet de réaliser une étanchéité afin d'empêcher l'introduction de liquide ou de solide sous le profilé enjoliveur. En outre, l'effet esthétique obtenu est agréable.

Il n'y a pas de contact entre l'extrémité basse (25) et le cordon profilé (3). Il n'y a pas non plus de contact entre l'extrémité basse (25) et la baie de carrosserie (10) adjacente, malgré la proximité.

La figure 8 illustre un contact entre la face intérieure du profilé enjoliveur (2) et le cordon profilé adjacent ; toutefois, ce contact n'est pas strictement indispensable.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

En particulier, différentes formes sont encore envisageables, tant pour le (ou les) élément(s) femelle(s) creux que pour le (ou les) élément(s) mâle(s) saillant(s) ; il est notamment possible de prévoir une conicité plus ou moins développée d'un élément et/ou de l'autre selon la direction d'introduction de l'élément mâle dans l'élément femelle.

Il est par exemple possible de réalisation la fixation de telle sorte que plusieurs éléments mâles saillants coopèrent avec un élément femelle creux ou avec chaque élément femelle creux.

## Revendications

1. Dispositif de fixation (1) d'un profilé enjoliveur (2) sur une portion d'un cordon profilé (3) fixé sur un vitrage (4) et en particulier sur au moins une partie de la périphérie d'un vitrage, ledit dispositif comportant au moins un clip (5) rigide présentant au moins une partie de coopération amont A destinée à permettre la coopération avec ledit cordon profilé (3) et une partie de coopération aval B destinée à permettre la coopération avec ledit profilé enjoliveur (2), ladite partie de coopération amont A comportant au moins un élément mâle saillant (6) ou un élément femelle creux (T), cet élément coopérant respectivement avec un élément femelle creux (7) ou un élément mâle saillant (6') correspondant ménagé dans le cordon profilé (3), ledit élément femelle creux (7, 7') présentant des dimensions intérieures au moins partiellement inférieures aux dimensions extérieures dudit élément mâle saillant (6, 6'), **caractérisé en ce que** ladite partie de coopération amont A présente en outre une partie proximale recourbée (11) destinée à venir appuyer sur une face intérieure (14) dudit vitrage (4) **et en ce que** d'une part un évidement (16) est opéré dans le cordon profilé (3) pour permettre le passage de la partie proximale (11) et le contact de cette partie avec la face intérieure (14) ou d'autre part la partie proximale (11) contourne le cordon profilé (3) et vient en appui dessus sans modification de sa forme.

2. Dispositif de fixation (1) selon la revendication 1, **caractérisé en ce que** ledit élément femelle creux (7, 7') forme un trou ne débouchant que sur une face respectivement dudit cordon profilé (3) ou du clip (5).

3. Dispositif de fixation (1) selon la revendication 1, **caractérisé en ce que** ledit élément femelle creux (7') lorsqu'il est réalisé dans ledit clip (5) forme un trou débouchant sur deux faces opposées dudit clip (5).

4. Dispositif de fixation (1) selon la revendication 1, **caractérisé en ce que** ledit élément mâle saillant (6, 6') est constituée d'un bossage présentant en coupe transversale un tronc (8, 8') et une extrémité arrondie (9, 9').

5. Dispositif de fixation (1) selon la revendication précédente, **caractérisé en ce que** ledit élément mâle saillant (6, 6') présente en coupe transversale un rétrécissement de section.

6. Dispositif de fixation (1) selon la revendication 1, **caractérisé en ce que** ledit élément mâle saillant (6, 6') présente en coupe transversale une forme sensiblement parallélépipédique.

7. Dispositif de fixation (1) selon l'une quelconque des revendications précédentes, **caractérisé en ce que** ladite partie proximale recourbée (11) présente de face sensiblement la forme d'un T.

8. Dispositif de fixation (1) selon l'une quelconque des revendications précédentes , **caractérisé en ce que** ladite partie proximale (11) est collée au moins en partie sur la face intérieure (14) dudit vitrage (4) ou sur le cordon profilé (3).

9. Dispositif de fixation (1) selon l'une quelconque des revendications précédentes, **caractérisé en ce que** ladite partie de coopération aval B présente en vue de côté sensiblement la forme d'un V ou d'un Y.

10. Dispositif de fixation (1) selon la revendication précédente, **caractérisé en ce que** une branche (21) du V ou Y se termine par une extrémité arrondie (22) et **en ce que** la branche adjacente (23) du V ou Y se termine par une extrémité triangulaire (24) ou en L.

11. Dispositif de fixation (1) selon la revendication précédente, **caractérisé en ce que** l'extrémité arrondie (22) présente un diamètre légèrement inférieure à l'épaisseur de la branche (21) et **en ce que** cette extrémité arrondie (22) est positionnée décalée par rapport à un axe de symétrie de la branche (21) qui la porte.

12. Dispositif de fixation (1) selon la revendication 10 ou la revendication 11, **caractérisé en ce que** l'extrémité triangulaire (24) présente en coupe sensiblement la forme d'une triangle équilatéral dont la hauteur est environ le triple de l'épaisseur de la branche (23) qui la porte.

13. Dispositif de fixation (1) selon l'une quelconque des revendications 1 à 9, **caractérisé en ce qu'**au moins un clip (5) est venu de matière avec ledit profilé enjoliveur (2).

14. Profilé enjoliveur (2) intégrant au moins un clip (5) pour un dispositif de fixation (1) selon la revendication précédente.

15. Clip (5) pour un dispositif de fixation (1) selon l'une quelconque des revendications 1 à13, ledit clip (5) présentant au moins une partie de coopération amont A destinée à permettre la coopération avec un cordon profilé (3) et une partie de coopération aval B destinée à permettre la coopération avec un profilé enjoliveur (2), ladite partie de coopération amont A comportant au moins un élément mâle saillant (6) ou un élément femelle creux (7'), cet élément coopérant respectivement avec un élément femelle creux (7) ou un élément mâle saillant (6') correspondant ménagé dans le cordon profilé (3) et ledit élément femelle creux (7, 7') présentant des dimensions intérieures au moins partiellement inférieures aux dimensions extérieures dudit élément mâle saillant (6, 6').

16. Vitrage (4) muni en particulier sur au moins une partie de sa périphérie d'un cordon profilé (3) fixé audit vitrage (4), ledit cordon profilé (3) étant pourvu sur au moins une portion d'un profilé enjoliveur (2), ledit vitrage (4) comportant en outre un dispositif de fixation (1) selon l'une quelconque des revendications 1 à 13, comportant au moins un clip (5) présentant au moins une partie de coopération amont A destinée à permettre la coopération avec ledit cordon profilé (3) et une partie de coopération aval B destinée à permettre la coopération avec ledit profilé enjoliveur (2), ladite partie de coopération amont A comportant au moins un élément mâle saillant (6) ou un élément femelle creux (7'), cet élément coopérant respectivement avec un élément femelle creux (7) ou un élément mâle saillant (6') correspondant ménagé dans le cordon profilé (3), ledit élément femelle creux (7, 7') présentant des dimensions intérieures au moins partiellement inférieures aux dimensions extérieures dudit élément mâle saillant (6, 6').

17. Vitrage. (4) selon la revendication précédente, **caractérisé en ce que** ledit élément mâle saillant (6, 6') ou ledit élément femelle creux (7, 7') est ménagé dans la partie du cordon profilé (3) adjacente au chant du vitrage (4).

## Claims

1. A device (1) for attaching a profiled trim (2) to a portion of a shapedbead (3) monted on a glazing (4) and in particular on at least part of the periphery of a glazing, said device comprising at least one rigid clip (5) having at least an upstream interacting part A designed to allow interaction with said shaped bead (3) and a downstream interacting part B designed to allow interaction with said profiled trim (2), said upstream interacting part A comprising at least one protruding male element (6) or a hollow female element (7'), this element interacting respectively with a corresponding hollow female element (7) or a protruding male element (6') arranged in the shaped bead (3), said hollow female element (7, 7') having internal dimensions at least partially less than the external dimensions of said protruding male element (6, 6') **characterized in that** said upstream interacting part A also has a curved proximal part (11) designed to come to bear on an inner face (14) of said glazing (4) **and in that** on the one hand an indentation (16) is made in the shaped bead (3) to allow the proximal part (11) to pass and this part to make contact with the inner face (14) or on the other hand the proximal part (11) skirts the shaped bead (3) and comes to bear thereupon without modification of its shape.

2. The attachment device (1) as claimed in claim 1, **characterized in that** said hollow female element (7, 7') forms a hole that opens onto only one face respectively of said shaped bead (3) or of the clip (5).

3. The attachment device (1) as claimed in claim 1, **characterized in that** said hollow female element (7'), when it is made in said clip (5), forms a hole opening onto two opposite faces of said clip (5).

4. The attachment device (1) as claimed in claim 1, **characterized in that** said protruding male element (6, 6') consists of a boss having, in cross section, a trunk (8, 8') and a rounded end (9, 9').

5. The attachment device (1) as claimed in the preceding claim, **characterized in that** said protruding male element (6, 6') has in cross section a sectional narrowing.

6. The attachment device (1) as claimed in claim 1, **characterized in that** said protruding male element (6, 6') has in cross section a substantially parallelepipedic shape.

7. The attachment device (1) as claimed in the preceding claim, **characterized in that** said curved proximal part (11) is, in front view, substantially T-shaped.

8. The attachment device (1) as claimed in claim 6 or claim 7, **characterized in that** said proximal part (11) is bonded at least in part to the inner face (14) of said glazing (4) or to the shaped bead (3).

9. The attachment device (1) as claimed in any one of the preceding claims, **characterized in that** said downstream interacting part B is, in side view, substantially V-shaped or Y-shaped.

10. The attachment device (1) as claimed in the preceding claim, **characterized in that** one branch (21) of the V or of the Y terminates in a rounded end (22) and **in that** the adjacent branch (23) of the V or of the Y terminates in a triangular end (24) or L-shaped end.

11. The attachment device (1) as claimed in the preceding claim, **characterized in that** the rounded end (22) has a diameter that is slightly less than the thickness of the branch (21) and **in that** this rounded end (22) is positioned offset relative to an axis of symmetry of the branch (21) that supports it.

12. The attachment device (1) as claimed in claim 10 or claim 11, **characterized in that** the triangular end (24) has, in section, substantially the shape of an equilateral triangle whose height is approximately three times the thickness of the branch (23) that supports it.

13. The attachment device (1) as claimed in any one of claims 1 to 9, **characterized in that** at least one clip (5) is made of the same material and in one piece with said profiled trim (2).

14. A profiled trim (2) incorporating at least one clip (5) for an attachment device (1) as claimed in the preceding claim.

15. A clip (5) for an attachment device (1) as claimed in any one of claims 1 to 13, said clip (5) having at least one upstream interacting part A designed to allow interaction with an shaped bead (3) and a downstream interacting part B designed to allow interaction with a profiled trim(2), said upstream interacting part A comprising at least one protruding male element (6) or a hollow female element (7'), this element interacting respectively with a corresponding hollow female element (7) or a protruding male element (6') arranged in the shaped bead (3) and said hollow female element (7, 7') having internal dimensions at least partially less than the external dimensions of said protruding male element (6, 6').

16. A glazing (4) furnished in particular on at least part of its periphery with a shaped bead (3) mounted on said glazing (4), said shaped bead (3) being provided on at least a portion with a profiled trim (2), said glazing (4) also comprising an attachment device (1) as claimed in any one of claims 1 to 13, comprising at least one clip (5) having at least an upstream interacting part A designed to allow interaction with said shaped bead (3) and a downstream interacting part B designed to allow interaction with said profiled trim (2), said upstream interacting part A comprising at least one protruding male element (6) or one hollow female element (7'), this element interacting respectively with a corresponding hollow female element (7) or a protruding male element (6') arranged in the shaped bead (3), said hollow female element (7, 7') having internal dimensions at least partially less than the external dimensions of said protruding male element (6, 6').

17. The glazing (4) as claimed in the preceding claim, **characterized in that** said protruding male element (6, 6') or said hollow female element (7, 7') is arranged in the part of the shaped bead (3) adjacent to the edge of the glazing (4).

## Patentansprüche

1. Befestigungsvorrichtung (1) eines Zierprofils (2) auf einem einer Portion einer an einer Verglasung (4) befestigten Profilschnur (3) und insbesondere auf wenigstens einem Teil des Umfangs einer Verglasung, wobei die gesagte Vorrichtung wenigstens einen starren Clip (5) mit wenigstens einem stromaufwärtigen Anpassungsteil A, um Zusammenarbeit mit der gesagten Profilschnur (3) zu ermöglichen, und einen stromabwärtigen Anpassungsteil B, um Zusammenarbeit mit dem gesagten Zierprofil (2) zu ermöglichen, umfasst, wobei der gesagte stromaufwärtige Anpassungsteil A mindestens ein hervorstehendes männliches Element (6) beziehungsweise ein hohles weibliches Element (7') umfasst, wobei dieses Element mit einem entsprechenden in der Profilschnur (3) angeordneten, hohlen weiblichen Element (7) beziehungsweise hervorstehenden männlichen Element (6') zusammenarbeitet, wobei das gesagte hohle weibliche Element (7, 7') innere Abmessungen aufweist, die wenigstens teilweise kleiner als die äusseren Abmessungen des gesagten hervorstehenden männliches Element (6, 6') sind, **dadurch gekennzeichnet, dass** der stromaufwärtige Anpassungsteil A zum Anlehnen an eine Innenseite (14) der gesagten Verglasung (4) weiterhin einen gekrümmten proximalen Teil (11) aufweist und dass einerseits zur Durchlassung des proximalen Teils (11) und Kontaktierung dieses Teils mit der Innenseite (14) eine Ausnehmung (16) in der Profilschnur (3) ausgeführt ist und andererseits der proximale Teil (11) um die Profilschnur herumgeht (3) und daran ohne Formabänderung anlehnt.

2. Befestigungsvorrichtung (1) nach Anspruch 1, **dadurch gekennzeichnet, dass** das hohle weibliche Element (7, 7') ein erst zu einer Seite der gesagten Profilschnur (3) beziehungsweise des Clips (5) führendes Loch bildet.

3. Befestigungsvorrichtung (1) nach Anspruch 1, **dadurch gekennzeichnet, dass** das gesagte hohle weibliche Element (7'), wenn es im gesagten Clip (5) ausgeführt ist, ein zu den beiden entgegengesetzten Seiten des gesagten Clips (5) führendes Loch bildet.

4. Befestigungsvorrichtung (1) nach Anspruch 1, **dadurch gekennzeichnet, dass** das gesagte hervorstehende männliche Element (6, 6') aus einem Buckel gebildet ist, der im Querschnitt einen Stamm (8, 8') und ein abgerundetes Ende (9, 9') aufweist.

5. Befestigungsvorrichtung (1) nach dem vorhergehenden Anspruch, **dadurch gekennzeichnet, dass** das hervorstehende männliche Element (6, 6') im Querschnitt eingeengt ist.

6. Befestigungsvorrichtung (1) nach Anspruch 1, **dadurch gekennzeichnet, dass** das gesagte hervorstehende männliche Element (6, 6') im Querschnitt im wesentlichen parallelepipedisch ist.

7. Befestigungsvorrichtung (1) nach einem der vorhergehenden Ansprüche, **dadurch gekennzeichnet, dass** der gesagte gekrümmte proximale Teil (11) vorderseitig im wesentlichen T-förmig ist.

8. Befestigungsvorrichtung (1) nach einem der vorhergehenden Ansprüche, **dadurch gekennzeichnet, dass** der gesagte proximale Teil (11) auf der Innenseite (14) der gesagten Verglasung (4) beziehungsweise auf der Profilschnur mindestens teilweise geklebt ist.

9. Befestigungsvorrichtung (1) nach einem der vorhergehenden Ansprüche, **dadurch gekennzeichnet, dass** der gesagte stromabwärtige Anpassungsteil B in Seitenansicht im wesentlichen V- beziehungsweise Y-förmig ist.

10. Befestigungsvorrichtung (1) nach dem vorhergehenden Anspruch, **dadurch gekennzeichnet, dass** ein Zweig (21) des "V" beziehungsweise "Y" mit einem abgerundeten Ende (22) endet und dass der benachbarte Zweig (23) des "V" beziehungsweise "Y" mit einem dreieckigen (24) oder L-förmigen Ende endet.

11. Befestigungsvorrichtung (1) nach dem vorhergehenden Anspruch, **dadurch gekennzeichnet, dass** das abgerundete Ende (22) einen Durchmesser aufweist, der leicht kleiner als die Dicke des Zweigs (21) ist und dass dieses abgerundete Ende (22) in Bezug auf eine Symmetrieachse des Zweigs (21) versetzt angeordnet ist, der das abgerundete Ende trägt.

12. Befestigungsvorrichtung (1) nach Anspruch 10 oder Anspruch 11, **dadurch gekennzeichnet, dass** das dreieckige Ende (24) in Schnittansicht im wesentlichen in der Form eines gleichseitigen Dreiecks ist, dessen Höhe ungefähr dreifach die Dicke des Zweigs (23) beträgt, der dieses Dreieck trägt.

13. Befestigungsvorrichtung (1) nach einem der Ansprüche 1 bis 9,
**dadurch gekennzeichnet, dass** mindestens ein Clip (5) aus demselben Material wie dem gesagten Zierprofil (2) besteht.

14. Zierprofil (2) umfassend wenigstens einen Clip (5) für eine Befestigungsvorrichtung (1) nach dem vorhergehenden Anspruch.

15. Clip (5) für eine Befestigungsvorrichtung (1) nach einem der Ansprüche 1 bis 13, wobei der gesagte Clip (5) mit wenigstens einem stromaufwärtigen Anpassungsteil A, um Zusammenarbeit mit der gesagten Profilschnur (3) zu ermöglichen, und mit einem stromabwärtigen Anpassungsteil B, um Zusammenarbeit mit dem gesagten Zierprofil (2) zu ermöglichen, versehen ist, wobei der gesagte stromaufwärtige Anpassungsteil A mindestens ein hervorstehendes männliches Element (6) beziehungsweise ein hohles weibliches Element (7') umfasst, wobei dieses Element mit einem entsprechenden in der Profilschnur (3) angeordneten, hohlen weiblichen Element (7) beziehungsweise hervorstehenden männlichen Element (6') zusammenarbeitet, wobei das gesagte hohle weibliche Element (7, 7') innere Abmessungen aufweist, die wenigstens teilweise kleiner als die äusseren Abmessungen des gesagten hervorstehenden männlichen Elements (6, 6') sind.

16. Verglasung (4) im Besonderen auf wenigstens einem Teil ihres Umfangs mit einer an der gesagten Verglasung (4) befestigten Profilschnur (3) versehen, wobei die gesagte Profilschnur (3) auf wenigstens einem Teil mit einem Zierprofil (2) versehen ist, wobei die gesagte Verglasung (4) zusätzlich eine Befestigungsvorrichtung (1) nach einem der Ansprüche 1 bis 13 umfasst, wenigstens einen Clip (5) mit wenigstens einem stromaufwärtigen Anpassungsteil A, um Zusammenarbeit mit der gesagten Profilschnur (3) zu ermöglichen, und einen stromabwärtigen Anpassungsteil B, um Zusammenarbeit mit dem gesagten Zierprofil zu ermöglichen (2), umfasst, wobei der gesagte stromaufwärtige Anpassungsteil A mindestens ein hervorstehendes männliches Element (6) beziehungsweise ein hohles weibliches Element (7') umfasst, wobei dieses Element mit einem entsprechenden in der Profilschnur (3) angeordneten, hohlen weiblichen Element (7) beziehungsweise hervorstehenden männlichen Element (6') zusammenarbeitet, wobei das gesagte hohle weibliche Element (7, 7') innere Abmessungen aufweist, die wenigstens teilweise kleiner als die äusseren Abmessungen des gesagten hervorstehenden männliches Element (6, 6') sind.

17. Verglasung (4) nach dem vorhergehenden Anspruch, **dadurch gekennzeichnet, dass** das gesagte hervorstehende männliche Element (6, 6') beziehungsweise das gesagte hohle weibliche Element (7, 7') in dem Abschnitt der zur Verglasungskante (4) benachbarten Profilschnur (3) angeordnet ist.
